# EUROPÄISCHE PATENTSCHRIFT

(11) **EP 1 253 490 B1**
(45) Veröffentlichungstag und Bekanntmachung des Hinweises auf die Patenterteilung: **17.08.2011**
(21) Anmeldenummer: 02008406.7
(22) Anmeldetag: 12.04.2002
(51) Int. Cl.: G05B 9/03

(54) **Verfahren und Vorrichtung zur sicheren Geschwindigkeitsüberwachung**
Method and device for secure speed monitoring
Procédé et dispositif de surveillance sécurisée de la vitesse

(30) Priorität: 25.04.2001 DE 10120283; 20.12.2001 DE 10163010
(43) Veröffentlichungstag der Anmeldung: 30.10.2002
(73) Patentinhaber: SIEMENS AKTIENGESELLSCHAFT, 80333 München (DE)
(72) Erfinder: Eckardt, Dieter, Dr., 91074 Herzogenaurach (DE); Rebbereh, Carsten, Dr., 91054 Erlangen (DE)

(56) Entgegenhaltungen:
- DE-A- 4 322 146
- DE-A- 4 330 823
- US-A- 5 585 709
- US-A- 5 619 131

## Beschreibung

Die Erfindung bezieht sich auf ein Verfahren zur sicheren Geschwindigkeitsüberwachung sowie auf eine damit korrespondierende Einrichtung.

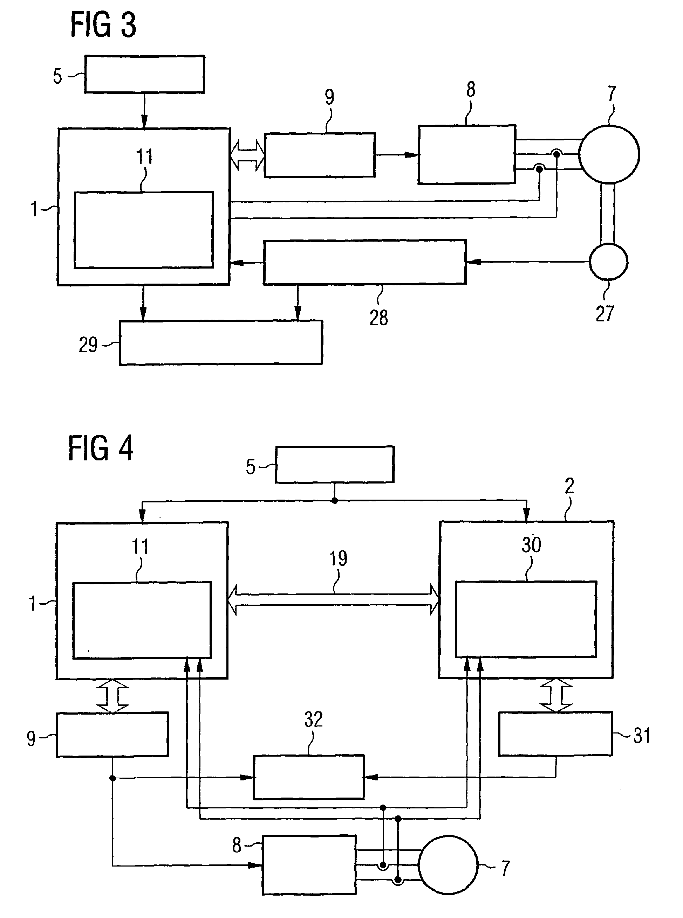

Der klassische Weg zur Überwachung einer. Geschwindigkeitsgrenze führt über den Einsatz eines Gebers, der - zusätzlich zur normalen Drehzahlregelung - eine Überwachung der Drehzahl erlaubt. Eine solche klassische Anordnung ist in der FIG 3 gezeigt. Ein Prozessor 1 fungiert als eine Regelung 11, der Sollwerte 5 als Eingangsgröße dienen und die über eine Pulserzeugung 9 und einen Umrichter 8 eine Maschine 7 ansteuert (hier eine dreiphasige Maschine). Aus den Phasenströmen werden entsprechende Istwerte an die Regelung 11 zurückgeführt. Über den Geber 27 und eine nachgeschaltete Geberauswertung 28 werden Gebersignale an die Regelung 11 sowie an eine zusätzliche Einheit 29 zur Fehlererkennung geliefert. Auch die Regelung liefert Werte an die Einheit 29. Hierbei ist das Auftreten genau eines Fehlers - Ausfall von Regelung 11 oder Geber 27 - aufgrund der dann auftretenden Inkonsistenz zwischen Geber- und Regelungsdaten erkennbar.

Soll der Antrieb jedoch geberlos betrieben werden, so gestaltet sich die Sachlage komplizierter (vgl. FIG 4). Ein Lösungsweg lässt sich hierzu folgendermaßen charakterisieren: Man verwendet im wesentlichen zwei identische Strukturen, die mit identischen Eingangsdaten versorgt werden, und vergleicht kreuzweise Prozessdaten und Ergebnisse. Wie in FIG 4 gezeigt, werden Sollwerte 5 einmal an den Prozessor 1 mit der Regelung 11 und zugleich an einen zweiten Prozessor 2 mit einer weiteren Regelung 30 geleitet. Ein kreuzweiser Datenvergleich erfolgt über eine Kommunikationsverbindung 19 zwischen den beiden Prozessoren 1 und 2. Über eine jeweilige Pulserzeugung 9 und 31 werden Ansteuersignale generiert, die eingangsseitig einer Einheit 32 zur logischen Verknüpfung und Identifikation von Abweichungen zugeführt werden. Hier ist somit der komplette Steuersatz redundant ausgeführt, die beiden resultierenden Sätze von Ansteuersignalen für die Transistoren des Umrichters 8 werden logisch verknüpft und so auf Fehler untersucht. Zur Ansteuerung der Transistoren werden nur die Signale des ersten Steuersatzes bzw. der ersten Pulserzeugung 9 herangezogen. Der Umrichter steuert die Maschine 7, wobei ebenfalls aus den Phasenströmen entsprechende Istwerte an die Regelung 11 zurückgeführt werden.

Diese Vorgehensweise erlaubt die Identifikation einer Fehlfunktion in den genannten Strukturen. Das Problem durchziehender Lasten wird bei dieser bekannten Lösung nicht beherrscht.

Aus der US 5,619 131 A ist ein Verfahren zur sicheren Geschwindigkeitsüberwachung mittels zweier Prozessoren bekannt, die über eine Kommunikationseinrichtung miteinander verbunden sind und beide eine Überwachung durchführen.

Aus der DE 43 30 823 A ist ein Verfahren zur sicheren Geschwindigkeitsüberwachung mittels eines Prozessors und einer weiteren Überwachungseinrichtung bekannt, die über eine Kommunikationseinrichtung miteinander verbunden sind. Bei diesem Verfahren führen der Prozessor und die weitere Überwachungseinrichtung ihre Überwachung auf unterschiedliche Weise durch.

Aufgabe der vorliegenden Erfindung ist es daher, eine sicher reduzierte Geschwindigkeit zu realisieren. Dabei ist "sicher" im Sinne der 1-Fehler-Sicherheit zu verstehen. Insbesondere soll dabei sichergestellt werden, dass der gesetzte Geschwindigkeitsgrenzwert auch bei Auftreten genau eines Fehlers im System nicht überschritten wird. Eine weitere Aufgabe ist, dass der Fehler darüber hinaus erkannt wird und zu einer sicheren Abschaltung des Antriebes führt.

Gemäß der vorliegenden Erfindung wird diese Aufgabe durch ein Verfahren zur sicheren Geschwindigkeitsüberwachung mittels zweier Prozessoren gelöst, wobei beide Prozessoren über eine Kommunikationseinrichtung miteinander verbunden sind, die beiden Prozessoren auf unterschiedliche Weise eine Überwachung durchführen und beide Prozessoren Ergebnisse kreuzweise vergleichen.

Nach einer ersten vorteilhaften Ausgestaltung des Verfahrens nach der Erfindung arbeitet der erste Prozessor einen jeweils regulären Regelungsalgorithmus ab und führt anhand eines geschätzten oder gemessenen Drehzahlwertes die gewünschte Überwachung auf Überschreitung der Drehzahlgrenze und/oder entsprechende Folgereaktionen durch und der zweite Prozessor ermittelt aus den Stromistwerten die aktuelle Ausgangsfrequenz eines zugeordneten Umrichters und führt dementsprechend analog zum ersten Prozessor eine Grenzwertüberwachung und/oder entsprechende Folgereaktionen bei dessen Überschreitung durch.

Dabei hat es sich als günstig erwiesen, wenn zur Ermittlung der Ausgangsfrequenz aus mindestens zwei gemessenen Phasenströmen ein Stromraumzeiger bestimmt wird und die aktuelle Ausgangsfrequenz aus der zeitlichen Ableitung des Winkels des Stromraumzeigers ermittelt wird. Vorteilhaft erfolgt vor der Durchführung einer zeitlichen Ableitung eine Tiefpassfilterung.

Eine alternative Ausgestaltung zeichnet sich dadurch aus, dass der erste Prozessor einen jeweils regulären Regelungsalgorithmus abarbeitet und anhand eines geschätzten oder gemessenen Drehzahlwertes die gewünschte Überwachung auf Überschreitung der Drehzahlgrenze und/oder entsprechende Folgereaktionen durchführt und der zweite Prozessor aus einer Rekonstruktion der Spannung der Ansteuersignale des Systems die aktuelle Ausgangsfrequenz eines zugeordneten Umrichters ermittelt und dementsprechend analog zum ersten Prozessor eine Grenzwertüberwachung und/oder entsprechende Folgereaktionen bei dessen Überschreitung durchführt.

In diesem Fall hat es sich günstig erwiesen, wenn eine Rekonstruktion der Spannung der Ansteuersignale des Systems durch deren geeignete Filterung erfolgt, insbesondere durch Filterung mit einem P-T1-Glied mit einer Grenzfrequenz, die über der maximalen Ausgangsfrequenz und unter der Pulsfrequenz des Umrichters liegt.

Vorteilhaft werden die Ansteuersignale von lediglich zwei Stromventilen in unterschiedlichen Zweigen einer Brücke des Umrichters ausgewertet. Es ist aber auch eine Auswertung von mehr als zwei Transistoren möglich.

Zur sicheren Geschwindigkeitsüberwachung einer Synchronmaschine wird gemäß der Erfindung eine aktuelle Drehzahl gleich der ermittelten Ausgangsfrequenz angenommen und ein außer Tritt Fallen wird anhand hoher Ausgleichsströme erkannt, worauf eine Abschaltung des Umrichters erfolgt.

Zur sicheren Geschwindigkeitsüberwachung einer Asynchronmaschine im generatorischen Betrieb wird die Asynchronmaschine derart ausgelegt, dass mit der durchziehenden Last einhergehende Drehmomente auch von der zweiphasig betriebenen Asynchronmaschine noch beherrscht werden.

In allen Fällen hat es sich als günstig herausgestellt, wenn ein Drehzahlsollwert mit dem ersten und dem zweiten Prozessor zweikanalig auf einen vorgegebenen Grenzwert limitiert wird.

Eine weitere vorteilhafte Ausgestaltung des Verfahrens gemäß der Erfindung zeichnet sich dadurch aus, dass beide Prozessoren auf der Grundlage einer gemeinsamen Zeitbasis arbeiten, wobei in beiden Prozessoren über jeweilige Zeitgeber jeweilige Taktsignale erzeugt werden, die dem jeweils anderen Prozessor zum Vergleich mit einem Nominalwert bereitgestellt werden, wobei im Fall einer Abweichung, insbesondere einer Abweichung größer einer vorgegebenen Toleranzschwelle, ein sicherer Halt herbeigeführt wird.

Ferner wird die Aufgabe der Erfindung durch eine Einrichtung zur sicheren Geschwindigkeitsüberwachung mit einem System aus zwei Prozessoren gelöst, in dem Prozessergebnisse kreuzweise miteinander vergleichbar sind, wobei beide Prozessoren über eine Kommunikationseinrichtung miteinander in Verbindung stehen und der erste und der zweite Prozessor derart programmiert sind, dass die Überwachung auf unterschiedliche Weise durchführbar ist.

Eine erste vorteilhafte Ausführungsform der erfindungsgemäßen Einrichtung zeichnet sich dadurch aus, dass durch den ersten Prozessor ein regulärer Regelungsalgorithmus abarbeitbar ist und dass anhand eines geschätzten oder auch gemessenen Drehzahlwertes die gewünschte Überwachung auf Überschreitung der Drehzahl durchführbar ist, und dass durch den zweiten Prozessor aus den Stromistwerten die jeweils aktuelle Ausgangsfrequenz eines Umrichters des Systems ermittelbar ist und dass in analoger Weise zum ersten Prozessor eine Grenzwertüberwachung und/oder entsprechende Folgereaktionen bei dessen Überschreitung durchführbar sind.

Eine alternative vorteilhafte Ausführungsform zeichnet sich dadurch aus, dass durch den ersten Prozessor ein regulärer Regelungsalgorithmus abarbeitbar ist und dass anhand eines geschätzten oder auch gemessenen Drehzahlwertes die gewünschte Überwachung auf Überschreitung der Drehzahl durchführbar ist, und dass durch den zweiten Prozessor aus einer Rekonstruktion der Spannung aus den Ansteuersignalen zugeordneter Transistoren die jeweils aktuelle Ausgangsfrequenz eines Umrichters des Systems ermittelbar ist und dass in analoger Weise zum ersten Prozessor eine Grenzwertüberwachung und/oder entsprechende Folgereaktionen bei dessen Überschreitung durchführbar sind.

Besonders vorteilhaft lässt sich die Erfindung auf der Grundlage einer numerischen Steuerung realisieren, indem ein Regelungsprozessor der Steuerung als erster Prozessor dient und ein für eine Kommunikationsanbindung vorgesehener Kommunikationsprozessor als zweiter Prozessor dient oder umgekehrt.

Ein großer Vorteil des geschilderten Verfahrens ist die Tatsache, dass die Funktionalität "sicher reduzierte Geschwindigkeit" mit einem sehr geringen zusätzlichen Hardwareaufwand realisiert werden kann. Es ist insbesondere weder nötig, einen zusätzlichen Geber vorzusehen, noch müssen Teile der Ansteuerung mehrfach realisiert werden. Das Verfahren erkennt aufgrund der Auswertung der Phasenströme darüber hinaus auch Fehler im Leistungsteil. Außerdem können durchziehende Lasten bei geeigneter Projektierung der Anlage beherrscht werden.

Weitere Vorteile und Details der Erfindung ergeben sich anhand der Beschreibung zweier Ausführungsbeispiele und in Verbindung mit den Figuren. Es zeigen jeweils in Prinzipdarstellung:
- FIG 1: ein Blockschaltbild einer Einrichtung zur sicheren Geschwindigkeitsüberwachung nach der Erfindung unter Einsatz einer Strommessung,
- FIG 2: ein Blockschaltbild einer Einrichtung zur sicheren Geschwindigkeitsüberwachung nach der Erfindung unter Einsatz einer Spannungsauswertung,
- FIG 3: eine herkömmliche Überwachungsstruktur mit Geber und
- FIG 4: eine bekannte geberlose Überwachungsstruktur.

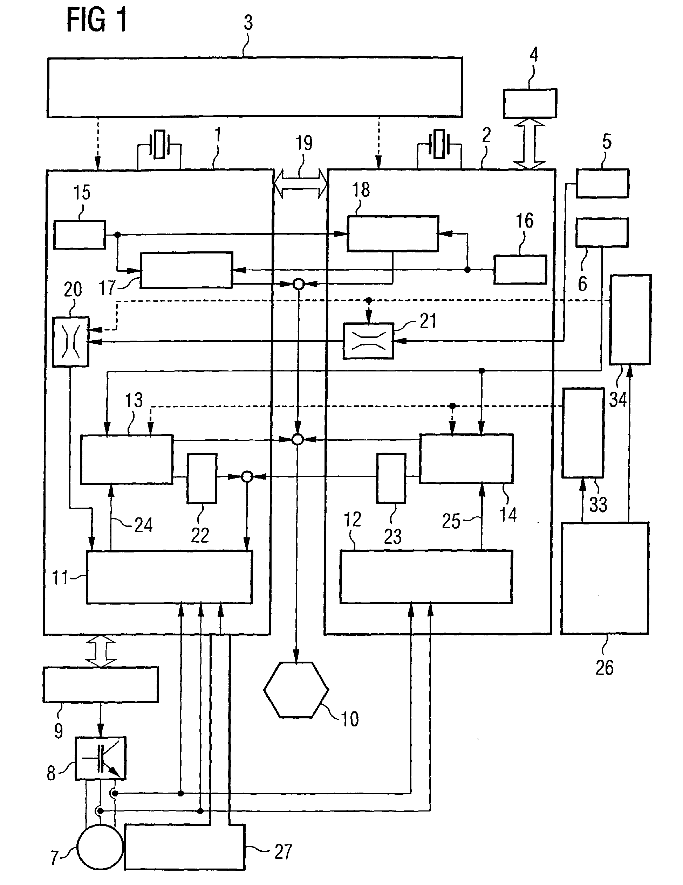

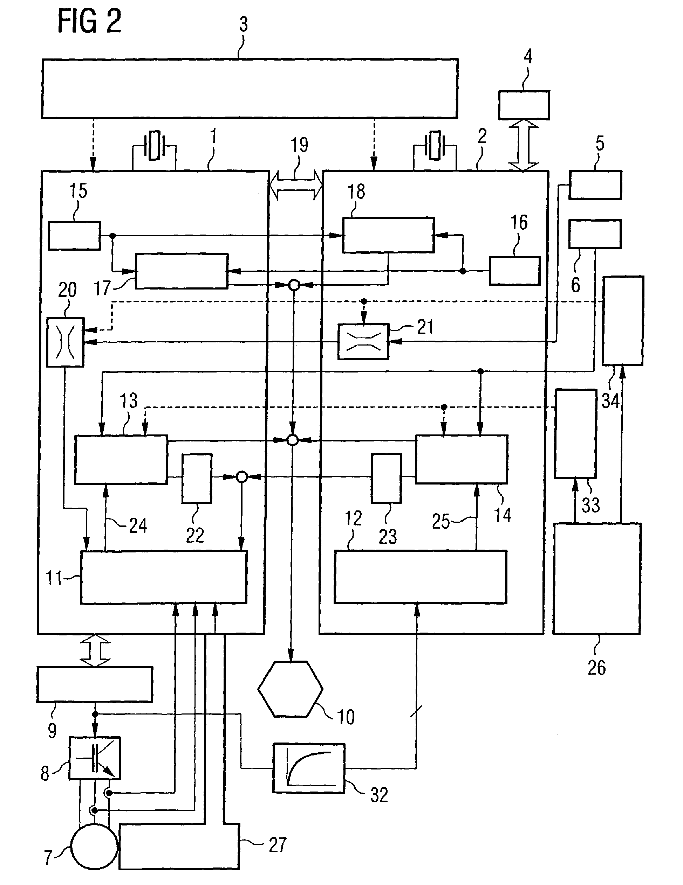

Ein zentrales Element der Erfindung ist eine Struktur aus zwei Prozessoren wie sie im vorangehenden beschrieben wurde, die jedoch im Gegensatz zu den bisherigen Lösungsansätzen auf unterschiedliche Weise die Überwachung der Geschwindigkeitsgrenze durchführen und die Ergebnisse kreuzweise vergleichen. Die beiden Darstellungen nach FIG 1 und FIG 2 zeigen zwei mögliche Ausführungsformen der Erfindung in Form von Blockschaltbildern.

Die beiden Prozessoren 1 und 2 sind über eine Kommunikationseinrichtung 19 verbunden. Dies kann eine parallele oder auch eine (nicht notwendigerweise sichere) serielle Verbindung sein. Die Prozessoren 1 und 2 müssen nicht notwendig in räumlicher Nähe zueinander angeordnet sein. Beide Prozessoren werden von einer überlagerten Steuerung 3 angesteuert und mit Sollwerten 5 beaufschlagt. Außerdem werden Sicherheitsparameter 6 an den jeweiligen Prozessoren zugeordnete Überwachungseinheiten 13 und 14 geleitet. Diese Überwachungseinheiten dienen zur Auslösung eines sicheren Halts 10 sowie von Bremskommandos 22 und 23, welche über die jeweiligen Regelungseinheiten 11 und 12 ausgeführt werden. Eine Ansteuerung von Pulserzeugung 9, Umrichter 8 und Maschine 7 erfolgt in den Ausführungsbeispielen nur durch den ersten Prozessor 1. Ein Gebersystem 27 kann optional vorhanden sein, wird jedoch für die Funktion nach der Erfindung nicht benötigt.

Der erste Prozessor 1 arbeitet den regulären Regelungsalgorithmus der Regelung 11 ab und führt anhand eines geschätzten oder auch gemessenen Drehzahlwertes (z.B. Schätzwert 24 der Ständerfrequenz) die gewünschte Überwachung 13 auf Überschreitung der Drehzahlgrenze durch. Bei Überschreitung der Grenze wird zunächst das Kommando 22 "Bremsen" an die Regelung 11 gegeben und entweder bei Erreichen der Drehzahl 0 oder sobald feststellbar ist, dass keine ausreichende Bremswirkung erzielt werden kann, ein Eintritt in den sicheren Halt 10 eingeleitet.

Der zweite Prozessor 2 ermittelt entweder aus den (ohnehin erfassten) Stromistwerten (vgl. FIG 1) oder aus einer Rekonstruktion der Spannung aus den Ansteuersignalen der Transistoren (vgl. FIG 2) die aktuelle Ausgangsfrequenz des Umrichters und führt in analoger Weise zum ersten Prozessor 1 eine Grenzwertüberwachung 14 und entsprechende Folgeaktionen bei dessen Überschreitung durch.

Zur Ermittlung der Ausgangsfrequenz im Prozessor 2, beispielsweise auf Basis der gemessenen Ströme wie in FIG 1 gezeigt, wird aus den (in der Regel zwei) gemessenen Phasenströmen der Stromraumzeiger errechnet. Dazu werden die Phasenströme zyklisch abgetastet und die Messwerte digitalisiert. Die zeitliche Ableitung des Winkels des Stromraumzeigers entspricht gerade der gesuchten Ausgangsfrequenz. Zur Vermeidung von Problemen bei der Differentiation können noch geeignete Tiefpassfilterungen der einzelnen Signale vorgenommen werden. Diese Maßnahmen erfolgen in einer Einheit 12 zur Ermittlung der Signalfrequenz und zur Überwachung der Signale auf Plausibilität, die einen Messwert 25 der Ständerfrequenz an die Überwachungseinheit 14 liefert. Die Messung von zwei Phasenströmen erlaubt zudem eine Auswertung der Phasenbeziehung der beiden Ströme, so dass der Ausfall einer der drei Phasen detektiert werden kann. Fehler im Leistungsteil werden also mit erfasst.

Alternativ können die Spannungssignale ausgewertet werden wie in dem Ausführungsbeispiel nach FIG 2 gezeigt. Die Anordnung entspricht, abgesehen von der Ermittlung der Ausgangsfrequenz, im wesentlichen der aus FIG 1. Dazu werden aus den von der Pulserzeugung 9 gelieferten Ansteuersignalen der Transistoren die zugehörigen Spannungen durch eine geeignete Filterung rekonstruiert. Dazu genügen zwei in unterschiedlichen Zweigen der Bücke angeordnete Transistoren.

Als Filter 32 kann im einfachsten Fall ein P-T1-Glied mit einer hinreichend niedrigen Grenzfrequenz (größer als maximale Ausgangsfrequenz, deutlich kleiner als die Pulsfrequenz) verwendet werden. Da nur die Ansteuersignale der Transistoren zur Auswertung herangezogen werden, können bei diesem Verfahren keine Fehler im Leistungsteil ermittelt werden. Hier erfolgt die Erkennung jedoch im Rahmen der Regelungs- und Schutzmechanismen des Umrichters 8, da diese eine Auswertung der aktuell fließenden Ströme umfassen.

Eine Überwachung der Ausgangsfrequenz als Maß für die wirkliche Drehzahl des Motors ist aus den folgenden Gründen zulässig:
- bei Synchronmaschinen ist die (elektrische) Drehzahl gerade gleich der Frequenz der Ausgangsspannung; sollte die Maschine außer Tritt gefallen sein, so wird dieser Fehlerzustand aufgrund der hohen Ausgleichsströme erkannt und der Umrichter abgeschaltet
- bei Asynchronmotoren unterscheidet sich die (elektrische) Drehzahl um den Schlupf von der Ausgangsfrequenz des Umrichters; dabei ist im motorischen Betrieb die Drehzahl stets kleiner als die Frequenz der Spannung, insofern also vom Sicherheitsstandpunkt unproblematisch; generatorischer Betrieb führt zu einem im Rahmen der Projektierung bekannten maximalen übersynchronen Betriebszustand, der durch geeignete Wahl des Grenzwertes beherrschbar bleibt
- tritt bei einer Asynchronmaschine ein Drahtbruch auf, so verfügt sie über ein geringeres Drehmoment als im Normalbetrieb; es kann also im motorischen Betrieb keine höhere Drehzahl auftreten als im fehlerfreien Betrieb; generatorische Betriebszustände können unter Umständen zu einer Überschreitung der zulässigen Grenzdrehzahl führen, da das Moment der Maschine nicht mehr ausreicht, um eine durchziehende Last zu bremsen; die Verwendung von durchziehenden Lasten muss daher auf Drehmomente beschränkt bleiben, die auch von der zweiphasig betriebenen Maschine noch beherrscht werden. Dies ist bei der Projektierung der Anlage zu beachten. Unter dieser Voraussetzung können beim vorliegenden Verfahren durchziehende Lasten beherrscht werden. Zur sicheren Erkennung des Fehlers muss dabei die Strommessung zum Einsatz kommen.

Bei Aktivierung der Funktion 26 "sicher reduzierte Geschwindigkeit" erfolgt eine Aktivierung 33 der Überwachungen 13 und 14 und es wird zudem der Drehzahlsollwert zweikanalig (einmal im Prozessor 2, danach nochmals im Prozessor 1) auf den Grenzwert limitiert (Begrenzungen 20 und 21 mit Aktivierung 34), so dass die Regelung zuverlässig einen korrekten Sollwert erhält.

Wird die sicher reduzierte Geschwindigkeit von einer höheren als der Grenzdrehzahl aus aktiviert, so muss zunächst ein Bremsvorgang auf die Grenzdrehzahl hin erfolgen. Dabei kann permanent überwacht werden, ob der Motor 7 wirklich mit der gewünschten Rate verzögert, und im Abweichungsfall sofort der sichere Halt 10 eingelegt werden.

Grundlage der funktionierenden Zusammenarbeit zwischen den beiden Prozessoren 1 und 2 ist die korrekte Funktion der Zeitbasen. Daher werden in beiden Prozessoren mittels jeweils zugeordneten Timern 15 und 16 Taktsignale erzeugt, die dem jeweils anderen Prozessor zur Auswertung zur Verfügung gestellt werden. Dieser ermittelt die Periodendauer des Signals (Einheiten 17 und 18) und vergleicht sie mit dem bekannten Normalwert. Ist die Abweichung größer als eine Toleranzgrenze, so ist eine der Zeitbasen verstimmt, und es muss der sichere Halt 10 herbeigeführt werden.

Zusätzlich zu den genannten Sicherheitsfunktionen kann eine optionale übergeordnete Steuerung 3 zyklisch die relevanten Sicherheitsparameter in beiden Prozessoren prüfen und ggf. den Antrieb stillsetzen.

Als spezielle Ausführungsform verwendet man als Prozessor 1 den ohnehin für die Regelung vorhandenen Prozessor und für Prozessor 2 den (ebenfalls ohnehin vorhandenen) Kommunikationsprozessor, welcher für eine Feldbusanbindung 4 zuständig ist.

## Patentansprüche

1. Verfahren zur sicheren Geschwindigkeitsüberwachung mittels zweier Prozessoren (1,2), die über eine Kommunikationseinrichtung (19) miteinander verbunden sind, wobei die beiden Prozessoren (1,2) auf unterschiedliche Weise eine Überwachung durchführen, wobei beide Prozessoren (1,2) Ergebnisse kreuzweise vergleichen.

2. Verfahren nach Anspruch 1, **dadurch gekennzeichnet,**
- **dass** der erste Prozessor (1) einen regulären Regelungsalgorithmus abarbeitet und anhand eines geschätzten oder gemessenen Drehzahlwertes die gewünschte Überwachung (13) auf Überschreitung der Drehzahlgrenze und/oder entsprechende Folgereaktionen durchführt und
- **dass** der zweite Prozessor (2) aus den Stromistwerten die aktuelle Ausgangsfrequenz eines zugeordneten Umrichters (8) ermittelt und dementsprechend analog zum ersten Prozessor (1) eine Grenzwertüberwachung (14) und/oder entsprechende Folgereaktionen bei dessen Überschreitung durchführt.

3. Verfahren nach Anspruch 2, **dadurch gekennzeichnet, dass** zur Ermittlung der Ausgangsfrequenz aus mindestens zwei gemessenen Phasenströmen ein Stromraumzeiger bestimmt wird und die aktuelle Ausgangsfrequenz aus der zeitlichen Ableitung des Winkels des Stromraumzeigers ermittelt wird.

4. Verfahren nach Anspruch 3, **dadurch gekennzeichnet, dass** vor der Durchführung einer zeitlichen Ableitung eine Tiefpassfilterung erfolgt.

5. Verfahren nach Anspruch 1, **dadurch gekennzeichnet,**
- **dass** der erste Prozessor (1) einen regulären Regelungsalgorithmus abarbeitet und anhand eines geschätzten oder gemessenen Drehzahlwertes die gewünschte Überwachung (13) auf Überschreitung der Drehzahlgrenze und/oder entsprechende Folgereaktionen durchführt und
- **dass** der zweite Prozessor (2) aus einer Rekonstruktion der Spannung der Ansteuersignale des Systems die aktuelle Ausgangsfrequenz eines zugeordneten Umrichters (8) ermittelt und dementsprechend analog zum ersten Prozessor (1) eine Grenzwertüberwachung (14) und/oder entsprechende Folgereaktionen bei dessen Überschreitung durchführt.

6. Verfahren nach Anspruch 5, **dadurch gekennzeichnet, dass** eine Rekonstruktion der Spannung der Ansteuersignale des Systems durch deren geeignete Filterung erfolgt, insbesondere durch Filterung mit einem P-T1-Glied (32) mit einer Grenzfrequenz, die über der maximalen Ausgangsfrequenz und unter der Pulsfrequenz des Umrichters (8) liegt.

7. Verfahren nach Anspruch 5 oder 6, **dadurch gekennzeichnet, dass** die Ansteuersignale von mindestens zwei Stromventilen in unterschiedlichen Zweigen einer Brücke des Umrichters (8) ausgewertet werden.

8. Verfahren nach einem der vorangehenden Ansprüche, **dadurch gekennzeichnet, dass** eine aktuelle Drehzahl gleich der ermittelten Ausgangsfrequenz angenommen wird und ein außer Tritt Fallen anhand hoher Ausgleichsströme erkannt wird, worauf eine Abschaltung des Umrichters (8) erfolgt.

9. Verfahren nach einem der Ansprüche 1 bis 4, **dadurch gekennzeichnet, dass** es bei einer Asynchronmaschine im generatorischen Betrieb mit durchziehender Last angewendet wird und dass die Asynchronmaschine derart ausgelegt wird, dass mit der durchziehenden Last einhergehende Drehmomente auch von der zweiphasig betriebenen Asynchronmaschine noch beherrscht werden.

10. Verfahren nach einem der vorangehenden Ansprüche, **dadurch gekennzeichnet, dass** ein Drehzahlsollwert mit dem ersten und dem zweiten Prozessor (1, 2) zweikanalig auf einen vorgegebenen Grenzwert limitiert wird.

11. Verfahren nach einem der vorangehenden Ansprüche, **dadurch gekennzeichnet, dass** beide Prozessoren (1,2) auf der Grundlage einer gemeinsamen Zeitbasis arbeiten, wobei in beiden Prozessoren (1,2) über jeweilige Zeitgeber (15,16) jeweilige Taktsignale erzeugt werden, die dem jeweils anderen Prozessor (2,1) zum Vergleich mit einem Nominalwert bereitgestellt werden, wobei im Fall einer Abweichung, insbesondere einer Abweichung größer einer vorgegebenen Toleranzschwelle, ein sicherer Halt herbeigeführt wird.

12. Einrichtung zur sicheren Geschwindigkeitsüberwachung mittels zweier Prozessoren (1,2), wobei beide Prozessoren (1, 2) über eine Kommunikationseinrichtung (19) miteinander in Verbindung stehen, wobei der erste und der zweite Prozessor (1, 2) derart programmiert sind, dass sie die Überwachung auf unterschiedliche Weise durchführen und Prozessergebnisse kreuzweise miteinander vergleichen.

13. Einrichtung nach Anspruch 12, **dadurch gekennzeichnet,**
- **dass** durch den ersten Prozessor (1) ein regulärer Regelungsalgorithmus abarbeitbar ist und dass anhand eines geschätzten oder auch gemessenen Drehzahlwertes die gewünschte Überwachung (13) auf Überschreitung der Drehzahl durchführbar ist, und
- **dass** durch den zweiten Prozessor (2) aus den Stromistwerten die jeweils aktuelle Ausgangsfrequenz eines Umrichters (8) ermittelbar ist und in analoger Weise zum ersten Prozessor (1) eine Grenzwertüberwachung (14) und/oder entsprechende Folgereaktionen bei dessen Überschreitung durchführbar sind.

14. Einrichtung nach Anspruch 12, **dadurch gekennzeichnet,**
- **dass** durch den ersten Prozessor (1) ein regulärer Regelungsalgorithmus abarbeitbar ist und dass anhand eines geschätzten oder auch gemessenen Drehzahlwertes die gewünschte Überwachung (13) auf Überschreitung der Drehzahl durchführbar ist, und
- **dass** durch den zweiten Prozessor (2) aus einer Rekonstruktion der Spannung aus den Ansteuersignalen zugeordneter Transistoren die jeweils aktuelle Ausgangsfrequenz eines Umrichters (8) ermittelbar ist und in analoger Weise zum ersten Prozessor (1) eine Grenzwertüberwachung (14) und/ oder entsprechende Folgereaktionen bei dessen Überschreitung durchführbar sind.

15. Numerische Steuerung mit einer Einrichtung nach einem der Ansprüche 12 bis 14, **dadurch gekennzeichnet, dass** je einer der Prozessoren (1, 2) als Regelungsprozessor der Steuerung und als für eine Kommunikationsanbindung vorgesehener Kommunikationsprozessor dient.

## Claims

1. Method for reliable speed monitoring by means of two processors (1, 2), which are connected to one another by means of a communication device (19), wherein the two processors (1, 2) perform monitoring in different ways, wherein both processors (1, 2) compare results crosswise.

2. Method according to Claim 1, **characterized**
- **in that** the first processor (1) executes a regular control algorithm and uses an estimated or measured rotation speed value to perform the desired monitoring (13) for exceeding of the rotation speed limit and/or appropriate subsequent reactions, and
- **in that** the second processor (2) takes the actual current values and ascertains the present output frequency of an associated converter (8) and accordingly, in a similar fashion to the first processor (1), performs limit value monitoring (14) and/or appropriate subsequent reactions when said limit value is exceeded.

3. Method according to Claim 2, **characterized in that** the output frequency is ascertained by determining a current space vector from at least two measured phase currents and ascertaining the present output frequency from the time derivative of the angle of the current space vector.

4. Method according to Claim 3, **characterized in that** the performance of time derivation is preceded by low-pass filtering.

5. Method according to Claim 1, **characterized**
- **in that** the first processor (1) executes a regular control algorithm and uses an estimated or measured rotation speed value to perform the desired monitoring (13) for exceeding of the rotation speed limit and/or appropriate subsequent reactions, and
- **in that** the second processor (2) takes a reconstruction of the voltage of the actuation signals in the system and ascertains the present output frequency of an associated converter (8) and accordingly, in a similar fashion to the first processor (1), performs limit value monitoring (14) and/or appropriate subsequent reactions when said limit value is exceeded.

6. Method according to Claim 5, **characterized in that** the voltage of the actuation signals in the system is reconstructed by suitably filtering said actuation signals, particularly by filtering with a P-T1 element (32) at a cut-off frequency which is above the maximum output frequency and below the pulse frequency of the converter (8).

7. Method according to Claim 5 or 6, **characterized in that** the actuation signals are evaluated by at least two current valves in different branches of a bridge of the converter (8).

8. Method according to one of the preceding claims, **characterized in that** a present rotation speed is assumed to be equal to the ascertained output frequency and a loss of synchronism is identified from high equalization currents, whereupon the converter (8) is shut down.

9. Method according to one of Claims 1 to 4, **characterized in that** it is used for an asynchronous machine in generator mode with an overhauling load and **in that** the asynchronous machine is designed such that torques which accompany the overhauling load are also still controlled by the asynchronous machine operated on two phases.

10. Method according to one of the preceding claims, **characterized in that** a rotation speed setpoint value is limited to a prescribed limit value on two channels using the first and second processors (1, 2).

11. Method according to one of the preceding claims, **characterized in that** both processors (1, 2) operate on the basis of a common time base, wherein respective timers (15, 16) are used in both processors (1, 2) to produce respective clock signals which are made available to the respective other processor (2, 1) for comparison with a nominal value, wherein a discrepancy, particularly a discrepancy greater than a prescribed tolerance threshold, brings about a reliable stop.

12. Device for reliable speed monitoring by means of two processors (1, 2), wherein both processors (1, 2) are connected to one another by means of a communication device (19), wherein the first and second processors (1, 2) are programmed such that they perform the monitoring in different ways and compare process results with one another crosswise.

13. Device according to Claim 12, **characterized**
- **in that** the first processor (1) can execute a regular control algorithm and in that an estimated or else measured rotation speed value can be used to perform the desired monitoring (13) for exceeding of the rotation speed, and
- **in that** the second processor (2) can take the actual current values and ascertain the respective present output frequency of a converter (8) and, in a similar fashion to the first processor (1), can perform limit value monitoring (14) and/or appropriate subsequent reactions when said limit value is exceeded.

14. Device according to Claim 12, **characterized**
- **in that** the first processor (1) can execute a regular control algorithm and in that an estimated or else measured rotation speed value can be used to perform the desired monitoring (13) for exceeding of the rotation speed, and
- **in that** the second processor (2) can take a reconstruction of the voltage from the actuation signals of associated transistors and ascertain the respective present output frequency of a converter (8) and, in a similar fashion to the first processor (1), can perform limit value monitoring (14) and/or appropriate subsequent reactions when said limit value is exceeded.

15. Numerical controller having a device according to one of Claims 12 to 14, **characterized in that** a respective one of the processors (1, 2) is used as a control processor for the controller and as a communication processor which is provided for a communication link.

## Revendications

1. Procédé de contrôle sécurisé de la vitesse au moyen de deux processeurs ( 1, 2 ) qui sont reliés entre eux par un dispositif ( 19 ) de communication, dans lequel les deux processeurs effectuent un contrôle de manière différente, les deux processeurs ( 1, 2 ) comparant des résultats de manière croisée.

2. Procédé suivant la revendication 1, **caractérisé,**
- **en ce que** le premier processeur ( 1 ) élabore un algorithme régulier de régulation et, au moyen d'une évaluation ou d'une mesure d'une valeur de vitesse de rotation, effectue le contrôle ( 13 ) souhaité du dépassement de la vitesse de rotation et/ou de réactions correspondantes qui s'ensuivent et
- **en ce que** le deuxième processeur ( 2 ) détermine, à partir des valeurs réelles du courant, la fréquence de sortie instantanée d'un convertisseur ( 8 ) associé et effectue, en conséquence, d'une manière analogue au premier processeur ( 1 ), un contrôle ( 14 ) du dépassement d'une valeur limite et/ou de réactions correspondantes qui s'ensuivent.

3. Procédé suivant la revendication 2, **caractérisé en ce que**, pour la détermination de la fréquence de sortie, on détermine, à partir de la mesure d'au moins deux courants de phase, un vecteur d'espace de courant et, on détermine la fréquence de sortie instantanée à partir de la dérivée dans le temps de l'angle du vecteur d'espace de courant.

4. Procédé suivant la revendication 3, **caractérisé en ce qu'**avant d'effectuer une dérivation dans le temps, on effectue un filtrage passe-bas.

5. Procédé suivant la revendication 1, **caractérisé,**
- **en ce que** le premier processeur ( 1 ) élabore un algorithme de régulation régulier et, au moyen d'une évaluation ou d'une mesure d'une valeur de vitesse de rotation, effectue le contrôle ( 13 ) souhaité du dépassement de la limite de la vitesse de rotation et/ou de réactions correspondantes qui s'ensuivent et
- **en ce que** le deuxième processeur ( 2 ) détermine, à partir des valeurs réelles du courant, la fréquence de sortie instantanée d'un convertisseur ( 8 ) associé et effectue, en conséquence, d'une manière analogue au premier processeur ( 1 ), un contrôle ( 14 ) du dépassement d'une valeur limite et/ou de réactions correspondantes qui s'ensuivent.

6. Procédé suivant la revendication 5, **caractérisé, en ce qu'**on effectue une reconstruction de la tension des signaux de commande du système par leur filtrage approprié, notamment par filtrage par un élément ( 32 ) P-T1 ayant une fréquence limite qui est au-dessus de la fréquence maximum de sortie et en dessous de la fréquence d'impulsions du convertisseur ( 8 ).

7. Procédé suivant la revendication 5 ou 6, **caractérisé en ce que** l'on exploite les signaux de commande d'au moins deux soupapes de courant dans des branches différentes d'un pont du convertisseur ( 8 ).

8. Procédé suivant l'une des revendications précédentes, **caractérisé en ce que** l'on suppose une vitesse de rotation instantanée égale à la fréquence de sortie déterminée et on détecte un cas de décrochage au moyen de courant de compensation intense, à la suite de quoi il se produit un débranchement du convertisseur ( 8 ).

9. Procédé suivant l'une des revendications 1 à 4, **caractérisé en ce que** on l'utilise dans un moteur asynchrone en fonctionnement en génératrice à charge enfilée et **en ce que** l'on conçoit le moteur à synchrone de manière à ce que, par la charge enfilée, des couples de rotation inhérents soient encore maîtrisés aussi par le moteur asynchrone fonctionnant suivant deux phases.

10. Procédé suivant l'une des revendications précédentes, **caractérisé en ce qu'**une valeur de consigne de vitesse de rotation est limitée par le premier et le deuxième processeurs (1, 2 ) suivant deux canaux à une valeur limite prescrite.

11. Procédé suivant l'une des revendications précédentes, **caractérisé en ce que** les deux processeurs (1, 2 ) travaillent sur une base de temps commune, dans lequel on produit dans les deux processeurs ( 1, 2 ), par des horloges ( 15, 16 ) respectives, respectivement des signaux d'horloge qui sont mis à disposition respectivement de l'autre processeur ( 2, 1 ) pour la comparaison à une valeur nominale, dans lequel, dans le cas d'un écart, notamment d'un écart plus grand qu'un seuil de tolérances prescrit, un arrêt de sécurité est provoqué.

12. Dispositif de contrôle sécurisé de la vitesse au moyen de deux processeurs ( 1, 2 ), dans lequel les deux processeurs ( 1, 2 ) sont en liaison entre eux par un dispositif ( 19 ) de communication, dans lequel le premier et le deuxième processeurs ( 1, 2 ) sont programmés de manière à ce qu'ils effectuent le contrôle d'une façon différente et comparent des résultats de processeur entre eux d'une manière croisée.

13. Dispositif suivant la revendication 12, **caractérisé en ce que**,
- **en ce qu'**il peut être élaboré un premier algorithme de régulation régulier par le premier processeur ( 1 ) et **en ce que** au moyen d'une évaluation et aussi d'une mesure d'une valeur de vitesse de rotation, le contrôle ( 13 ) souhaité du dépassement de la vitesse de rotation peut être effectué, et
- **en ce qu'**il peut être déterminé par le deuxième processeur ( 2 ) à partir des valeurs réelles du courant, la fréquence de sortie instantanée d'un convertisseur ( 8 ) et, d'une manière analogue au premier processeur ( 1 ), un contrôle ( 14 ) du dépassement d'une valeur limite et/ou de réactions correspondantes qui s'ensuivent peut être effectué.

14. Dispositif suivant la revendication 12, **caractérisé**
- **en ce que**, par le premier processeur ( 1 ), un algorithme de régulation régulier peut être élaboré et en ce qu'au moyen d'une évaluation ou aussi d'une mesure d'une valeur de vitesse de rotation, on peut effectuer le contrôle ( 13 ) souhaité du dépassement de la vitesse de rotation, et
- **en ce que**, par le deuxième processeur ( 2 ), il peut être déterminé à partir d'une reconstruction de la tension, à partir des signaux de commande de transistors associés, la fréquence de sortie instantanée respective d'un convertisseur ( 8 ) et, d'une manière analogue au premier processeur ( 1 ), il peut être effectué un contrôle ( 14 ) du dépassement d'une valeur limite et/ou de réactions correspondantes qui s'ensuivent.

15. Commande numérique comprenant un dispositif suivant l'une des revendications 12 à 14, **caractérisée en ce que** respectivement l'un des processeurs ( 1, 2 ) sert de processeur de régulation de la commande et de processeur de communication prévu pour une liaison de communication.
